# EUROPÄISCHE PATENTANMELDUNG

(11) **EP 2 020 535 A2**
(43) Veröffentlichungstag der Anmeldung: **04.02.2009**
(21) Anmeldenummer: 08160312.8
(22) Anmeldetag: 14.07.2008
(51) Int. Cl.: F16H 45/02, F16F 15/123, F16F 15/134

(54) **Torsionsschwingungsdämpfer**

(30) Priorität: 28.07.2007 DE 102007035530; 01.09.2007 DE 102007041683
(71) Anmelder: ZF Friedrichshafen AG, 88038 Friedrichshafen (DE)
(72) Erfinder: Tychsen, Matthias, 97453, Schonungen-Mainberg (DE); Wack, Erwin, 97464, Niederwerrn (DE)

(57) **Zusammenfassung**

Ein Torsionsschwingungsdämpfer (80) für eine Überbrückungskupplung (48) einer hydrodynamischen Kopplungsanordnung (1) ist mit wenigstens einer Dämpfungseinrichtung (96) ausgebildet, die über einen Dämpfer-Eingangsteil (87), wenigstens einen Energiespeicherteil (134) mit zumindest einem Energiespeicher (86) und wenigstens einen Dämpfer-Ausgangsteil (87) verfügt. Entweder der Dämpfer-Eingangsteil (87) oder der Dämpfer-Ausgangsteil (89) verfügt über eine Führungsvorrichtung (138) für den zumindest einen Energiespeicher (86), die dem Energiespeicher eine Relativbewegbarkeit in Umfangsrichtung sowie eine Abstützung wenigstens im wesentlichen in Radialrichtung gegen die Wirkung einer drehzahlbedingten Fliehkraft ermöglicht. Der zumindest eine Energiespeicher (86) weist wenigstens an Segmenten (142) seines der Führungsvorrichtung (138) zugewandten Abschnittes (144) an Windungen einen Anschliff (148) auf.

## Beschreibung

Die Erfindung bezieht sich auf einen Torsionsschwingungsdämpfer an einer Überbrückungskupplung einer hydrodynamischen Kupplungsanordnung entsprechend dem Oberbegriff des Anspruches 1.

Ein solcher Torsionsschwingungsdämpfer ist beispielsweise aus der DE 10 2005 058 783 A1 bekannt. Die hydrodynamische Kopplungsanordnung, als Drehmomentwandler realisiert, ist mit einer Überbrückungskupplung ausgebildet, die eine Wirkverbindung zwischen einem mit einem Antrieb, wie der Kurbelwelle einer Brennkraftmaschine, drehfesten Kupplungsgehäuse und dem Torsionsschwingungsdämpfer herstellt, der seinerseits mit einem Abtrieb in Form einer Getriebeeingangswelle wirkverbunden ist. Der Torsionsschwingungsdämpfer verfügt über zwei mit Radialversatz zueinander angeordnete Energiespeicherteile, von denen jeder mit Energiespeichern versehen ist.

Ein an einem Kolben der Überbrückungskupplung angebundenes Ansteuerblech dient als Dämpfer-Eingangsteil des antriebsseitigen Energiespeicherteils, während ein Zwischen-Übertragungselement als Dämpfer-Ausgangsteil des antriebsseitigen Energiespeicherteils sowie als Dämpfer-Eingangsteil des abtriebsseitigen Energiespeicherteils vorgesehen ist. Eine Nabe des abtriebsseitigen Energiespeicherteils dient als deren Dämpfer-Ausgangsteil, das mit dem Abtrieb in drehfester Verbindung steht.

Das Zwischen-Übertragungselement umschließt den antriebsseitigen Energiespeicherteil ebenso wie den abtriebsseitigen Energiespeicherteil jeweils entlang eines Teils deren Umfanges, und bildet dadurch für jeden dieser Energiespeicherteile jeweils eine Führungswandung einer Führungsvorrichtung, an welcher die Energiespeicher des jeweiligen Energiespeicherteils eine relativbewegbare Aufnahme sowie eine Abstützung wenigstens im wesentlichen in Radialrichtung gegen die Wirkung einer drehzahlbedingten Fliehkraft vorfinden. Hierdurch ergibt sich allerdings folgendes Problem:

Bei modernen Automatgetrieben wird zugunsten eines vorzüglichen Wirkungsgrades versucht, die Überbrückungskupplung bei immer geringerer Drehzahl zu schließen, um dadurch schlupfbedingte Verluste im hydrodynamischen Kreis des hydrodynamischen Drehmomentwandlers zu vermeiden. Hierdurch bedingt, müssen die Torsionsschwingungsdämpfer in hydrodynamischen Drehmomentwandlern immer leistungsfähiger werden, wofür zum einen die Energiespeicherraten im Sinne der Steifigkeit eines Energiespeichers gesenkt und zum anderen die Reibung im Torsionsschwingungsdämpfer reduziert werden kann. Es hat sich allerdings gezeigt, dass Energiespeicher mit geringer Energiespeicherrate zwar eine hohe Entkopplungsgüte bei Torsionsschwingungen liefern, sich aber fliehkraftbedingt nach radial außen durchbiegen, zumal solche Energiespeicher, die reichlich potentielle Energie speichern sollen, und üblicherweise über eine hohe Masse verfügen, extrem einer anliegenden Fliehkraftwirkung ausgesetzt sind. Dadurch verursachen gerade solche Energiespeicher eine hohe Reibung an einer ihnen zugewandten Führungswandung der zugeordneten Führungsvorrichtung.

Der Erfindung liegt die Aufgabe zugrunde, einen Torsionsschwingungsdämpfer derart auszubilden, dass auch bei Verwendung von Energiespeichern mit geringer Energiespeicherrate im Sinne der Steifigkeit eines Energiespeichers und hoher Masse eine reibungsarme Relativbewegbarkeit des Energiespeichers gegenüber einer Führungswandung einer Führungsvorrichtung sichergestellt ist.

Diese Aufgabe wird durch die Merkmale des Anspruch 1 gelöst. Durch Ausbildung zumindest eines Energiespeichers wenigstens eines Energiespeicherteils zumindest an Segmenten seines einer Führungswandung einer Führungsvorrichtung zugewandten Abschnittes mit einem Anschliff an Windungen des Energiespeichers wird dafür gesorgt, dass eine erhebliche Reduzierung der Reibung zwischen diesem Energiespeicher und der Führungswandung der Führungsvorrichtung festzustellen ist. Die Reduzierung der Reibung kann nochmals verstärkt werden, wenn dem jeweiligen Anschliff eine wenigstens denselben überdeckende Beschichtung zugeordnet wird. Dies ist insbesondere dann interessant, wenn die Führungsvorrichtung an zumindest einem Erstreckungsbereich von Dämpfer-Eingangsteil oder Dämpfer-Ausgangsteil des Torsionsschwingungsdämpfers vorgesehen ist, und den zumindest einen Energiespeicher zumindest entlang eines Teils dessen Umfangs, also großflächig, umschließt.

Hierbei sind folgende Erkenntnisse entstanden:

Die Oberflächen von Energiespeichern für einen Torsionsschwingungsdämpfer werden üblicherweise bei der Herstellung durch einen Kugelstrahlprozess mechanisch bearbeitet. Dieser Kugelstrahlprozess führt zum einen zu Druckeigenspannungen in den Energiespeichern, und dadurch zu einer erheblichen Steigerung von deren Dauerfestigkeit, zum anderen aber zu einer rauen Oberfläche an den Energiespeichern. Durch den Anschliff an den Windungen der Energiespeicher, gegebenenfalls ergänzt durch eine den Anschliff überdeckende Beschichtung, wird die Oberflächengüte der Windungen erheblich gesteigert. Gleichzeitig wird durch die örtliche Begrenzung des Anschliffes im wesentlichen auf diejenigen Segmente des Energiespeichers, die der Führungswandung der Führungsvorrichtung zugewandt sind, also zumindest im wesentlichen radial außen liegende Segmente, dafür gesorgt, dass der Anschliff zumindest im wesentlichen am radial äußeren Abschnitt des zumindest einen Energiespeichers vorgenommen wird, und damit in einem Bereich des Energiespeichers, in welchem keine festigkeitskritischen Spannungen auftreten.

Durch Ausbildung der Windungen des zumindest einen Energiespeichers wenigstens im Erstreckungsbereich des Anschliffes mit einem zumindest im wesentlichen abgeflachten oder sogar einem ebenflächigen Bereich ergibt sich nicht nur eine hohe Oberflächengüte an den Windungen, sondern darüber hinaus auch eine für das Beschichten optimale Flächenform. Daraufhin wird auf die mittels des Anschliffes bearbeiteten Segmente des Energiespeichers eine sehr dünne Beschichtung aufgetragen, wobei diese Beschichtung mit Vorzug als DLC-Schicht ausgebildet ist, wobei DLC für "diamond like carbon" steht. Die Besonderheit liegt im Einsatz einer DLC-Beschichtung an einem elastisch verformbaren Bauteil, wie einem Energiespeicher.

Ein weiterer Vorzug der durch den Anschliff bearbeiteten Windungen des zumindest einen Energiespeichers liegt darin, dass der hierdurch erzielte, zumindest im wesentlichen abgeflachte oder sogar ebenflächige Bereich der Windungen mit einem Flächenkontakt anstatt eines Linienkontaktes, wie er bei Energiespeichern ohne Anschliff vorliegt, zur Anlage kommt. Hierdurch wird die Flächenpressung im Kontaktbereich der Windungen des zumindest einen Energiespeichers gegenüber der Führungswandung der Führungsvorrichtung erheblich reduziert.

Von besonderem Vorzug ist, ergänzend zum Anschliff von Segmenten der Windungen des zumindest einen Energiespeichers sowie ergänzend zur eventuellen Beschichtung zumindest des Anschliffbereiches dieser Segmente der Windungen auch eine Beschichtung der Führungsvorrichtung an deren dem zumindest einen Energiespeicher zugewandten Führungswandung. Dadurch kann die Reibung des Energiespeichers gegenüber der Führungsvorrichtung an dem entsprechenden Dämpferteil des Torsionsschwingungsdämpfers noch weiter reduziert werden.

Die Erfindung ist anhand eines Ausführungsbeispieles näher erläutert. Es zeigt:
Fig.1: die obere Hälfte eines Längsschnittes durch eine hydrodynamische Kupplungsanordnung mit einer Überbrückungskupplung und einem Torsionsschwingungsdämpfer, der über zwei Energiespeicherteile verfügt;
Fig. 2: eine räumliche Darstellung eines Ausschnittes eines Energiespeicherteiles des Torsionsschwingungsdämpfers;
Fig.3: eine Explosionsdarstellung des in Fig. 2 gezeigten Ausschittes des Energiespeicherteiles aus einer anderen Blickrichtung;
Fig. 4 eine Schnittdarstellung gemäß der Schnittlinie IV - IV in Fig. 2;
Fig. 5 wie Fig. 4, aber mit anderem Schliffbild;
Fig. 6 wie Fig. 5, aber mit einer Beschichtung radial außen
Fig. 7 wie Fig. 5, aber mit einer Rundumbeschichtung.

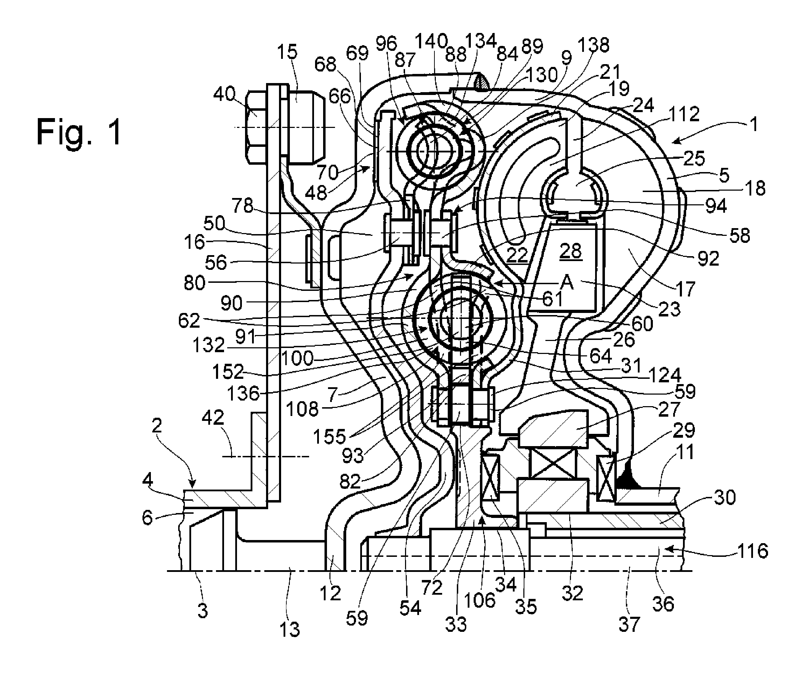

In Fig. 1 ist eine hydrodynamische Kupplungsanordnung 1 in Form eines hydrodynamischen Drehmomentwandlers dargestellt, der um eine Drehachse 3 Rotationsbewegungen auszuführen vermag. Die hydrodynamische Kupplungsanordnung 1 verfügt über ein Kupplungsgehäuse 5, das an seiner einem Antrieb 2, wie beispielsweise der Kurbelwelle 4 einer Brennkraftmaschine, zugewandten Seite, einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in bekannter Weise in einer Aussparung 6 der Kurbelwelle 4 zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb 2 dient, und zwar über die Flexplatte 16. Diese ist mittels Befestigungselementen 40 an der Befestigungsaufnahme 15 und mittels nur schematisch angedeuteten Befestigungselementen 42 an der Kurbelwelle 4 befestigt.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine als abtriebsseitiges Bauteil 116 der hydrodynamischen Kupplungsvorrichtung 1 dienende Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Torsionsdämpfernabe 33 drehfest, aber axial verschiebbar auf, wobei diese Torsionsdämpfernabe 33 zur relativ drehbaren Aufnahme eines Turbinenradfußes 31 dient. Die Torsionsdämpfernabe 33 stützt sich einerseits über eine Axiallagerung 35 am bereits genannten Freilauf 27 ab, und kommt andererseits über einen Kolben 54 einer Überbrückungskupplung 48 am Gehäusedeckel 7 zur Anlage.

Die bereits erwähnte Mittenbohrung 37 der Getriebeeingangswelle 36 dient zur Versorgung des hydrodynamischen Kreises 24 sowie zur Druckbeaufschlagung der Überbrückungskupplung 48, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die vorliegende Patentanmeldung aufgenommen zu betrachten.

Über die Mittenbohrung 37 der Getriebeeingangswelle 36 eingeströmte Hydraulikflüssigkeit gelangt in eine Kammer 50, die axial zwischen dem Gehäusedeckel 7 und dem Kolben 54 der Überbrückungskupplung 48 angeordnet ist. Der Kolben 54 ist mit seiner von der Kammer 50 abgewandten Seite dem hydrodynamischen Kreis 24 zugewandt und in Abhängigkeit von den Druckverhältnissen im hydrodynamischen Kreis 24 sowie in der Kammer 50 zum Ein- oder Ausrücken der Überbrückungskupplung 48 zwischen zwei unterschiedlichen Grenzstellungen axial bewegbar.

Der Kolben 54 trägt in seinem radial äußeren Bereich an der dem Gehäusedeckel 7 zugewandten Seite einen Reibbelag 68, wobei durch diesen ein Reibbereich 69 bereitgestellt wird, der mit je einem Gegenreibbereich 70 am Gehäusedeckel 7 zusammenwirkt. Radial innerhalb des Reibbelages 68 ist am Kolben 54 mittels Vernietung 56 ein antriebsseitiges Übertragungselement 78 eines Torsionsschwingungsdämpfers 80 befestigt.

Das antriebsseitige Übertragungselement 78 verfügt über einen sich im Wesentlichen radial erstreckenden Bereich, der nach radial außen greifende Ansteuerelemente 84 aufweist, die mit einem antriebsseitigen Energiespeicherteil 134, nachfolgend als antriebsseitige Energiespeichergruppe 130 bezeichnet, in Wirkverbindung versetzbar sind. Die antriebsseitige Energiespeichergruppe 130 verläuft im Wesentlichen in Umfangsrichtung und stützt sich anderenends an Ansteuerelementen 88 eines antriebsseitigen Deckbleches 90 ab, wobei dieses die antriebsseitige Energiespeichergruppe 130 auf einem Teil ihres Umfangs umfasst. Das antriebsseitige Deckblech 90 steht über eine Vernietung 58 sowie eine Verzapfung 59 in drehfester Verbindung mit einem abtriebsseitigen Deckblech 92, über die Verzapfung 59 darüber hinaus auch mit dem Turbinenradfuß 31. Die Deckbleche 90 und 92 dienen gemeinsam als Zwischen-Übertragungselement 94 des Torsionsschwingungsdämpfers 80. Die Verzapfung 59 dient in einer Zusatzfunktion als Bauteil einer Verdrehwinkelbegrenzung 124 zwischen den Deckblechen 90, 92 und einer mit der Torsionsdämpfernabe 33 drehfesten Nabenscheibe 82, indem die Verzapfung 59 in Umfangsaussparungen 72 eingreift, die in der Nabenscheibe 82 vorgesehen sind, und sich in Umfangsrichtung langlochförmig erstrecken. Die Umfangsaussparungen 72 lassen dadurch eine umfangsseitig begrenzte Relativbewegung der Verzapfung 59 in Umfangsrichtung zu. Die Nabenscheibe 82 bildet gemeinsam mit der Torsionsdämpfernabe 33 ein abtriebsseitiges Übertragungselement 106 des Torsionsschwingungsdämpfers 80.

Zurückkommend auf die als Zwischen-Übertragungselement 94 wirksamen Deckbleche 90, 92, sind diese radial zwischen Vernietung 58 und Verzapfung 59 mit Ausnehmungen 155 in Form von Federfenstern 62 für einen abtriebsseitigen Energiespeicherteil 136, der nachfolgend als abtriebsseitige Energiespeichergruppe 132 bezeichnet ist, versehen, während die als abtriebsseitiges Übertragungselement 106 der abtriebsseitigen Dämpfungsvorrichtung 108 vorgesehene Nabenscheibe 82 mit Ansteuerelementen 60 für diese Energiespeichergruppe 132 ausgebildet ist, zwischen denen, in Umfangsrichtung gesehen, jeweils Ausnehmungen 152 in Form von Federfenstern 64 für die abtriebsseitige Energiespeichergruppe 132 vorgesehen sind.

Die Ausnehmungen 155 im Zwischen-Übertragungselement 92 nehmen Energiespeicher 100 der abtriebsseitigen Energiespeichergruppe 132 in Umfangsrichtung jeweils beiderends anliegend auf. Diese Energiespeicher 100 greifen weiterhin in Ausnehmungen 152 in der Nabenscheibe 82 ein. Die Federfenster 64 der Nabenscheibe 82 schließen, in Umfangsrichtung gesehen, Stege ein, die funktional als Ansteuerelemente 61 für die Energiespeicher 100 der abtriebsseitigen Energiespeichergruppe 132 wirksam sind.

Zur antriebsseitigen Energiespeichergruppe 130 bleibt nachzutragen, dass diese entweder über Energiespeicher 86 unterschiedlicher Steifigkeiten verfügen kann, oder aber über Energiespeicher 86 gleicher Steifigkeiten. Die Energiespeicher 86 sind zumindest auf einem Teil ihres Umfangs durch das Deckblech 90 umschlossen. Dieses Deckblech 90 dient als Führungsvorrichtung 138 für die Energiespeicher 86 der antriebsseitigen Energiespeichergruppe 130, indem es an seiner den Energiespeichern 86 zugewandten Seite über eine Führungswandung 140 verfügt, entlang derer die Energiespeicher 86 sich zum einen in Umfangsrichtung bewegen können, und die zudem die Energiespeicher 86 unter der Einwirkung einer drehzahlabhängigen Fliehkraft abstützt.

Aus dem antriebsseitigen Übertragungselement 78 soll in Verbindung mit der antriebsseitien Energiespeichergruppe 130 und dem Zwischen-Übertragungselement 94 eine antriebsseitige Dämpfungseinrichtung 96 des Torsionsschwingungsdämpfers 80 gebildet werden, aus dem Zwischen-Übertragungselement 94 zusammen mit der abtriebsseitigen Energiespeichergruppe 132 und dem abtriebsseitigen Übertragungselement 106 eine abtriebsseitige Dämpfungseinrichtung 108. Das antriebsseitige Übertragungselement 78 bildet demnach einen auf die antriebsseitige Energiespeichergruppe 130 einwirkenden Eingangsteil 87 der antriebsseitigen Dämpfungseinrichtung 96, und das Zwischen-Übertragungselement 94 einen mit der antriebsseitigen Energiespeichergruppe 130 zusammen wirkenden Ausgangsteil 89 der antriebsseitigen Dämpfungseinrichtung 96. Außerdem bildet das Zwischen-Übertragungselement 94 einen auf die abtriebsseitige Energiespeichergruppe 132 einwirkenden Eingangsteil 91 der abtriebsseitigen Dämpfungseinrichtung 108, und das abtriebsseitige Übertragungselement 106 einen mit der abtriebsseitigen Energiespeichergruppe 132 zusammen wirkenden Ausgangsteil 93 der abtriebsseitigen Dämpfungseinrichtung 108.

Da für die antriebsseitige Dämpfungseinrichtung 96 das Zwischen-Übertragungselement 94 als abtriebsseitiges Bauteil wirksam ist, und dieses über die Verzapfung 59 mit dem Turbinenrad 19 in Festverbindung steht, wirkt die antriebsseitige Dämpfungseinrichtung 96 wie ein Standardtorsionsdämpfer. Im Gegensatz dazu dient das Zwischen-Übertragungselement 94 bei der abtriebsseitigen Dämpfungseinrichtung 108 als antriebsseitiges Bauteil, während das abtriebsseitige Übertragungselement 106 dieser Dämpfungseinrichtung 108 zwar mit der Torsionsdämpfernabe 33 drehfest, gegenüber dem Turbinenrad 19 dagegen relativ drehbar ist. Insofern ist die abtriebsseitige Dämpfungseinrichtung 108 als Turbinentorsionsdämpfer wirksam.

Damit sind bei dem in Fig. 1 gezeigten Torsionsschwingungsdämpfer 80 ein Standardtorsionsdämpfer und ein Turbinentorsionsdämpfer in einer Baueinheit in Reihe geschaltet und können sich demnach bezüglich ihrer jeweils spezifischen Wirkungen ergänzen.

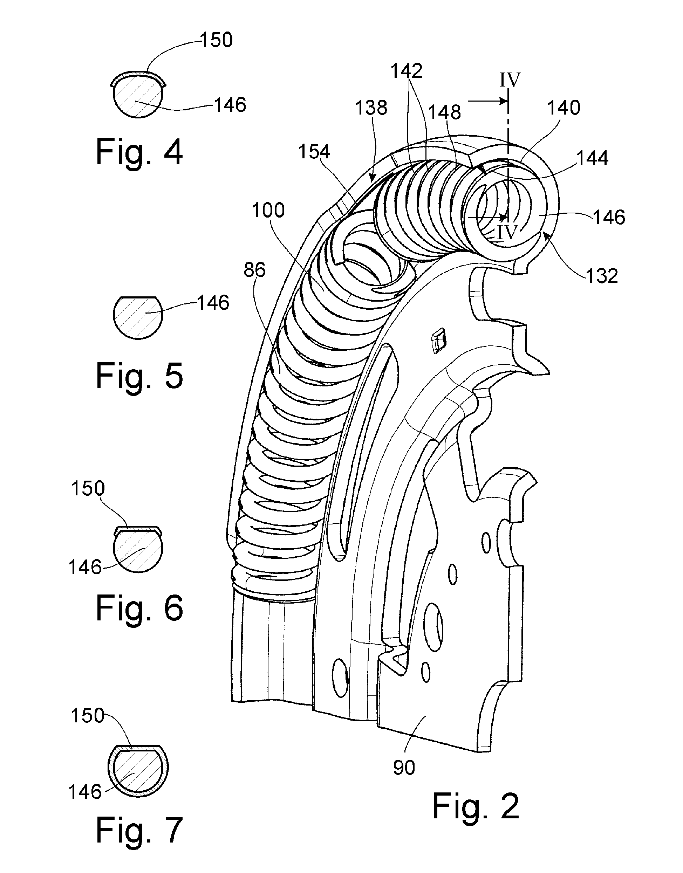

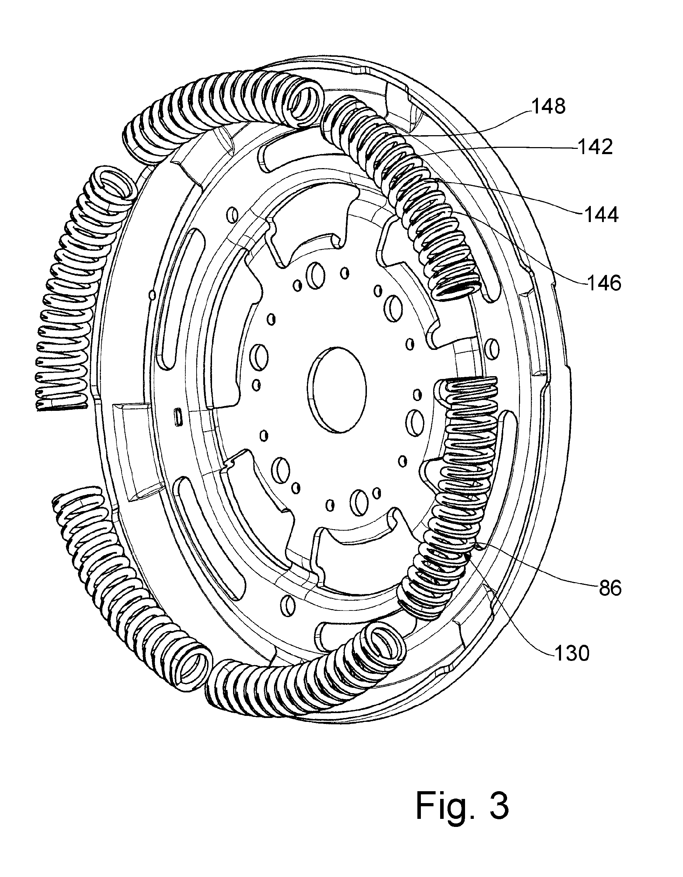

Fig. 2 und 3 zeigen das Deckblech 90 als Herauszeichnung mit den Energiespeichern 86 der antriebsseitigen Energiespeichergruppe 130. Deutlich erkennbar in Fig. 2 ist die Funktion des Deckbleches 90 als Führungsvorrichtung 138 für die Energiespeicher 100, indem die letztgenannten an der Führungswandung 140 der Führungsvorrichtung 138 in Anlage gelangen. Wie ebenfalls aus Fig. 2, besser noch aus Fig. 3 erkennbar ist, sind Windungen 146 der Energiespeicher 86 an Segmenten 142 ihres der Führungswandung 140 der Führungsvorrichtung 138 zugewandten Abschnittes 144 Anschliffe 148 vorgesehen. Der Abschnitt 144 und damit die Anschliffe 148 erstrecken sich, ausgehend von radial außen, jeweils nach radial innen, so dass beispielsweise die gesamten radial äußeren Hälften der Energiespeicher 86 jeweils als Abschnitt 144 wirksam sind. Die Anschliffe 148 sind hierbei vorzugsweise jeweils radial außen am stärksten ausgeprägt, um etwa im radialen Mittenbereich der Energiespeicher 86 weich auszulaufen. In Fig. 4 ist der in Fig. 2 gezeigte Schnitt IV - IV einer mit einem Anschliff behandelten Windung 146 im Querschnitt herausgezeichnet, wobei erkennbar ist, dass die Windung im radial äußeren Bereich, bedingt duch den Anschliff 148, einen zumindest im wesentlichen abgeflachten Bereich aufweist. Dieser Bereich ist aufgrund seiner gegenüber einem kreisförmigen Querschnitt abweichenden Form hervorragend zum Aufbringen einer Beschichtung 150 geeignet, die in Fig. 4 maßstäblich übertrieben eingezeichnet ist.

Die Beschichtung 150 wird nämlich mit Vorzug sehr dünn aufgetragen. Alternativ oder ergänzend kann, wie in Fig. 2 gezeigt, auch die Führungswandung 140 mit einer ebenfalls mit Vorzug sehr dünn aufgetragenen Beschichtung 154 versehen sein. Als Beschichtung 150 oder 154 eignet sich jeweils eine DLC-Schicht (diamond like carbon).

Alternative Lösungen für den Anschliff 148 sowie eine Beschichtung 150 an Windungen 146 des Energiespeichers 86 sind in den Fig. 5 bis 7 gezeigt. Fig. 5 zeigt einen Querschnitt durch eine Windung 146, bei welcher allein ein Anschliff 148 ohne Beschichtung realisiert ist. Abweichend von dem in Fig. 4 gezeigten Anschliff 148 ist derjenige in Fig. 5 nicht nur abgeflacht, sondern zumindest im wesentlichen ebenflächig ausgebildet. Fig. 6 zeigt den ebenflächigen Anschliff 148 mit einer Beschichtung 150 lediglich am ebenflächigen Bereich sowie an dessen Übergängen zum Rundbereich der Windung 146, Fig. 7 dagegen einen kompletten Überzug der Windung 146 durch eine Beschichtung 150.

Die Wirkungsweise der an den Windungen 146 der Energiespeicher 86 vorgenommenen Maßnahmen ist wie folgt:

Die Oberflächen der Energiespeicher 86 des Torsionsschwingungsdämpfers 80 werden bei der Herstellung durch einen Kugelstrahlprozess mechanisch bearbeitet. Dieser Kugelstrahlprozess führt zum einen zu Druckeigenspannungen in den Energiespeichern 86, und dadurch zu einer erheblichen Steigerung von deren Dauerfestigkeit, zum anderen aber zu einer rauen Oberfläche. Bereits durch den Anschliff 148 an den Windungen 146 der Energiespeicher 86 wird deren Oberflächengüte erheblich gesteigert. Glechzeitig liegt aber durch den Anschliff 148 eine perfekte Basis zum Aufbringen der Beschichtung 150 vor, zumal, wie bereits erwähnt, sich durch den Anschliff 148 jeweils abgeflachte Bereiche an den zu beschichtenden Stellen der Windungen 146 ergeben, so dass ein gegenüber einem kreisförmigen Querschnitt verbesserter Haftbereich entsteht. Verständlicherweise wird hierdurch die Reibung der Federwindungen 146 gegenüber der Führungswandung 140 der Führungsvorrichtung 138 erheblich gemindert. Dieser Effekt verstärkt sich durch Ausbildung auch der Führungswandung 140 an deren den Energiespeichern 86 zugewandten Seite mit der Beschichtung 154. Insgesamt wird somit die Entkopplungsqualität der antriebsseitigen Dämpfungseinrichtung 96 und dadurch des Torsionsschwingungsdämpfers 80 erheblich verbessert.

### Bezugszeichenliste

- 1: hydrod. Kupplungsanordnung
- 2: Antrieb
- 3: Drehachse
- 4: Kurbelwelle
- 5: Kupplungsgehäuse
- 6: Aussparung
- 7: Gehäusedeckel
- 9: Pumpenradschale
- 11: Pumpenradnabe
- 12: Zapfennabe
- 13: Lagerzapfen
- 15: Befestigungsaufnahme
- 16: Flexplate
- 17: Pumpenrad
- 18: Pumpenradschaufeln
- 19: Turbinenrad
- 21: Turbinenradschale
- 22: Turbinenradschaufeln
- 23: Leitrad
- 24: hydrodyn. Kreis
- 25: Innentorus
- 26: Leitradnabe
- 27: Freilauf
- 28: Leitradschaufeln
- 29: Axiallagerung
- 30: Stützwelle
- 31: Turbinenradfuß
- 32: Verzahnung
- 33: Torsionsdämpfernabe
- 34: Verzahnung
- 35: Axiallagerung
- 36: Getriebeeingangswelle
- 37: Mittenbohrung

- 38: Abdichtung
- 40, 42: Befestigungselemente
- 48: Überbrückungskupplung
- 50: Kammer
- 54: Kolben
- 56: Vernietung
- 58: Vernietung
- 59: Verzapfung
- 60, 61: Ansteuerelemente
- 62, 64: Federfenster
- 66: Reibbelagträger
- 68: Reibbeläge
- 69: Reibbereich
- 70: Gegenreibbereich
- 72: Umfangsaussparungen
- 78: antriebss. Übertragungselement
- 80: Torsionsschwingungsdämpfer
- 82: radial äußere Nabenscheibe
- 84: Ansteuerelemente
- 86: Energiespeicher
- 87: Eingangsteil
- 88: Ansteuerelemente
- 89: Ausgangsteil
- 91: Eingangsteil
- 90,92: Deckbleche
- 93: Ausgangsteil
- 94: Zwischen-Übertragungselement
- 96: antriebss. Dämpfungseinrichtung
- 100: Energiespeicher
- 104: radial innere Nabenscheibe
- 106: abtriebss. Übertragungselement
- 108: abtriebss. Dämpfungseinrichtung
- 112: Masseelement
- 116: abtriebss. Bauteil
- 124: Verdrehwinkelbegrenzung
- 130: antriebsseitige Energiespeichergruppe
- 132: abtriebsseitige Energiespeichergruppe
- 134: Energiespeicherteil
- 136: Energiespeicherteil
- 138: Führungsvorrichtung
- 140: Führungswandung
- 142: Segment
- 144: Abschnitt
- 146: Windungen
- 148: Anschliff
- 150: Beschichtung
- 152: Ausnehmungen des abtriebsseitigen Übertragungselementes
- 154: Beschichtung

## Patentansprüche

1. Torsionsschwingungsdämpfer (80) für eine Überbrückungskupplung 48) einer hydrodynamischen Kopplungsanordnung (1), mit wenigstens einer Dämpfungseinrichtung (96), die über einen Dämpfer-Eingangsteil (87), wenigstens einen Energiespeicherteil (134) mit zumindest einem Energiespeicher (86) und wenigstens einen Dämpfer-Ausgangsteil (89) verfügt, wobei entweder der Dämpfer-Eingangsteil (87) oder der Dämpfer-Ausgangsteil (89) über eine Führungsvorrichtung (138) für den zumindest einen Energiespeicher (86) verfügt, die dem Energiespeicher (86) eine Relativbewegbarkeit in Umfangsrichtung sowie eine Abstützung wenigstens im wesentlichen in Radialrichtung gegen die Wirkung einer drehzahlbedingten Fliehkraft ermöglicht,
**dadurch gekennzeichnet,**
**dass** der zumindest eine Energiespeicher (86) wenigstens an Segmenten (142) seines der Führungsvorrichtung (138) zugewandten Abschnittes (144) an Windungen (146) über einen Anschliff (148) verfügt

2. Torsionsschwingungsdämpfer nach Anspruch 1,
**dadurch gekennzeichnet,**
**dass** der zumindest eine Energiespeicher (86) wenigstens an den über einen Anschliff (148) verfügenden Windungen (146) eine wenigstens den Anschliff (148) überdeckende Beschichtung (150) aufweist.

3. Torsionsschwingungsdämpfer nach Anspruch 1 oder 2 mit einer Führungsvorrichtung (138), die an zumindest einem Erstreckungsbereich von Dämpfer-Eingangsteil (87) oder Dämpfer-Ausgangsteil (89) vorgesehen ist, und die den zumindest einen Energiespeicher (86) zumindest entlang eines Teils dessen Umfangs umschließt,
**dadurch gekennzeichnet,**
**dass** der zumindest eine Energiespeicher (86) die Segmente (142) mit dem Anschliff (148) und/oder die diesen Anschliff 148) überdeckende Beschichtung (1 50) auf diesem Teil des Umfangs seiner Windungen (146) aufweist.

4. Torsionsschwingungsdämpfer nach Anspruch 1, 2 oder 3,
**dadurch gekennzeichnet,**
**dass** der zumindest eine Energiespeicher (86) die Segmente (142) mit dem Anschliff (148) und/oder die diesen Anschliff (148) überdeckende Beschichtung (150) wenigstens im wesentlichen entlang der radial äußeren Hälfte dieses Energiespeichers (86) aufweist.

5. Torsionsschwingungsdämpfer nach einem der Ansprüche 1, 3 oder 4,
**dadurch gekennzeichnet,**
**dass** die Windungen (146) des zumindest einen Energiespeichers (86) nach dem Anschliff (148) wenigstens im Erstreckungsbereich des Anschliffes (148) über einen zumindest im wesentlichen abgeflachten Bereich verfügt.

6. Torsionsschwingungsdämpfer nach einem der Ansprüche 1, 3 oder 4,
**dadurch gekennzeichnet,**
**dass** die Windungen (146) des zumindest einen Energiespeichers (86) nach dem Anschliff (148) wenigstens im Erstreckungsbereich des Anschliffes (148) über einen zumindest im wesentlichen ebenflächigen Bereich verfügt.

7. Torsionsschwingungsdämpfer nach einem der Ansprüche 2 bis 4,
**dadurch gekennzeichnet,**
**dass** die den Anschliff (148) überdeckende Beschichtung (150) als DLC-Schicht ausgebildet ist.

8. Torsionsschwingungsdämpfer nach Anspruch 1,
**dadurch gekennzeichnet,**
**dass** die Führungsvorrichtung (138) an ihrer dem zumindest einen Energiespeicher (86) zugewandten Führungswandung (140) ebenfalls mit einer Beschichtung (154) ausgebildet ist.
